# EUROPÄISCHE PATENTSCHRIFT

(11) **EP 1 989 250 B1**
(45) Veröffentlichungstag und Bekanntmachung des Hinweises auf die Patenterteilung: **31.08.2011**
(21) Anmeldenummer: 07726437.2
(22) Anmeldetag: 20.02.2007
(51) Int. Cl.: C08J 5/18, C08L 27/06, B60K 15/03

(54) **BIODIESELÖLBESTÄNDIGE KUNSTSTOFFFOLIE**
BIODIESEL-RESISTANT PLASTICS FOIL
FEUILLE EN PLASTIQUE RESISTANTE A L'HUILE BIODIESEL

(30) Priorität: 20.02.2006 EP 06110172
(43) Veröffentlichungstag der Anmeldung: 12.11.2008
(73) Patentinhaber: Sika Technology AG, 6340 Baar (CH)
(72) Erfinder: KLAAR, Karlo, 53844 Troisdorf (DE); GUYER, Peter, CH-3366 Bollodingen (CH); SLONGO, Mario, CH-1712 Tafers (CH)
(74) Vertreter: Sika Patent Attorneys
(86) Internationale Anmeldenummer: PCT/EP2007/051616
(87) Internationale Veröffentlichungsnummer: WO 2007/096356

(56) Entgegenhaltungen:
- CA-A- 980 487
- DE-A1- 3 737 553
- DE-A1- 4 031 297
- GB-A- 1 270 836
- US-A- 5 096 756
- US-A- 5 547 741

## Beschreibung

### Technisches Gebiet

Die Erfindung betrifft das Gebiet der Kunststoffe, insbesondere der Folienherstellung. Die Erfindung betrifft die Verwendung einer Kunststofffolie umfassend eine Mischung aus Polyvinylchlorid (PVC) und mindestens einem thermoplastischen Polyurethan zur Abdichtung oder Auskleidung von Behältern für das Aufbewahren oder Fördern von Biodieselöl.

### Stand der Technik

Biodiesel nimmt als erneuerbarer Energieträger einen immer grösseren Stellenwert als Kraftstoffalternative für Diesel oder Benzin ein. Er wird in der Regel aus Pflanzenöl und Methanol hergestellt und ist daher umweltfreundlicher als herkömmlicher Diesel. Bei der Lagerung und Förderung von Biodiesel sind allerdings herkömmliche Tanks und Schläuche aus PVC nicht geeignet. Tanks und Schläuche aus PVC enthalten Weichmacher, damit sie nicht spröde werden. Biodiesel wirkt chemisch ebenfalls als Weichmacher in den Tanks, Schläuchen und Dichtungen, worauf das Material zunächst quillt und anschliessend der Weichmacher ausgewaschen wird. Die Tanks, Schläuche und Dichtungen werden somit spröde und undicht.

Thermoplastische Polyurethane (TPU) werden für spezielle Auskleidungen von z.B. Benzintanks verwendet. Ein reines thermoplastisches Polyurethan hat jedoch den Nachteil, dass es im Kontakt mit Biodieselöl und den darin enthaltenen Alkoholen zur Rissbildung neigt, die dann zur Undichtigkeit führt.

Offenlegungsschrift DE 3737553 A1 offenbart eine Weichfolienbahn aus PVC, Monomerweichmacher, Polymerweichmacher und Polyurethan, die zur Herstellung von Kinderspielzeug geeignet ist.

Zur Aufbewahrung von Biodieselöl wurden bisher Tankinnenräume und Lagerbehälter mit speziellen Metallverkleidungen oder rostfreiem Stahl dauerhaft ausgekleidet.

Es besteht daher das Bedürfnis, neue Zusammensetzungen bereitzustellen, welche biodieselölbeständig sind und dauerhafte Lösungen bieten.

### Darstellung der Erfindung

Aufgabe der vorliegenden Erfindung ist es daher, Zusammensetzungen bereit zu stellen, welche geeignet sind zum Abdichten oder Auskleiden von Behältern für das Aufbewahren oder Fördern von Biodieselöl oder Pflanzenöl. Überraschenderweise wurde gefunden, dass eine Kunststofffolie gemäss dem unabhängigen Anspruch diese Aufgabe löst. Besonders bevorzugte Ausführungsformen sind in den Unteransprüchen angegeben.

Diese Kunststofffolie zeichnet sich unter anderem dadurch aus, dass sie gegen Biodieselöl wie auch allgemein gegen Pflanzenöl beständig ist, d.h. dass die Kunststofffolie nicht durch Biodieselöl oder Pflanzenöl zersetzt wird, und dass sie gegen Hydrolyse von Wasser sowie den Abbau durch Bakterien geschützt ist. Überraschenderweise kann das thermoplastische Polyurethan anstelle des üblichen Weichmachers im PVC eingesetzt werden, es wird aber vom Biodieselöl nicht zersetzt.

### Weg zur Ausführung der Erfindung

Die vorliegende Erfindung betrifft die Verwendung einer Kunststofffolie zum Abdichten oder Auskleiden von Behältern für das Aufbewahren oder Fördern von Biodieselöl oder Pflanzenöl oder Mischungen davon. Die Kunststofffolie umfasst eine Mischung aus Polyvinylchlorid (PVC) und mindestens einem thermoplastischen Polyurethan.

Unter Mischung wird in der vorliegenden Schrift ein Polymer-Blend verstanden, womit man eine Mischung aus zwei oder mehreren Polymeren bzw. Copolymeren bezeichnet.

Vorzugsweise enthält die Folie keine üblichen Weichmacher, ist also weichmacherfrei. Unter Weichmacher wird in der vorliegenden Schrift ein Weichmacher verstanden, welcher üblicherweise dem PVC zugegeben wird, damit dieses verarbeitbar wird. Die am häufigsten eingesetzten Weichmacher stammen aus der Gruppe der Phthalsäureester. Meistens handelt es sich um Di-2-(ethylhexyl)-phthalat (DEHP), Diisodecyl-phthalat (DIDP), Diisononylphthalat (DINP), Di-n-Butylphthalat (DBP), oder Butylbenzylphthalat (BBP), welche die wichtigsten Weichmacher auf Phthalsäurebasis darstellen. Auch Phosphorsäureester, Trimellitsäureester oder acyclische Dicarbonsäureester, wie z.B. Ester der Adipinsäure, zählen zu den üblichen Weichmachern gemäss vorliegender Schrift. Vorzugsweise ist die Folie frei von Weichmachern auf Phthalsäureesterbasis.

Thermoplastisches Polyurethan wird nicht zu den üblichen Weichmachern im Sinne der vorliegenden Erfindung gezählt, es kann aber anstelle eines Weichmachers eingesetzt werden und die die Verarbeitbarkeit von PVC verbessern. Deshalb kann das thermoplastische Polyurethan die Funktion eines Weichmachers übernehmen.

Das thermoplastische Polyurethan wird aus Polyisocyanat, vorzugsweise aus mehreren Isocyanat-Gruppen aufweisenden Polyurethanen hergestellt.

Das Polyurethan wird aus der Umsetzung mindestens eines Polyisocyanates mit einer Verbindung, welche zwei oder mehrere NCO-reaktive funktionelle Gruppen aufweist, erhalten. Derartige NCO-reaktive Gruppen sind insbesondere Hydroxyl-, Merkapto- oder primäre oder sekundäre Amino-Gruppen.

Als Verbindung, welche zwei oder mehrere NCO-reaktive funktionelle Gruppen aufweist, gelten insbesondere Polyole, Polyamine, oder Polyaminoalkohole. Beispiele für Polyaminoalkohole sind Diethanolamin, Ethanolamin, Triethanolamin. Als Polyole sind Polyetherpolyole, Polyesterpolyole und Polycarbonatpolyole bevorzugt. Bevorzugt sind als Polyole Diole. Insbesondere bevorzugt sind Gemische von Polyolen, insbesondere ein Gemisch von nieder- und höhermolekularen Polyolen, insbesondere Diolen, insbesondere von nieder- und höhermolekularen Polyester-, Polyester- und Polycarbonatpolyolen, vorzugsweise ein Gemisch von nieder- und höhermolekularen Polyester-, Polyether- und Polycarbonatdiolen. Niedermolekulare Polyole haben bevorzugt ein Molekulargewicht von 100 bis 500 g/mol. Höhermolekulare Polyole haben bevorzugt ein Molekulargewicht von über 500 g/mol, noch mehr bevorzugt von 550 bis 5000 g/mol, insbesondere bevorzugt von 800 bis 3000 g/mol.

Als Polyesterpolyole sind insbesondere jene geeignet, welche hergestellt sind beispielsweise aus zwei- bis dreiwertigen Alkoholen, wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole, mit organischen Dicarbonsäuren oder deren Anhydride oder Ester, wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise aus ε-Caprolacton.

Besonders bevorzugte Polyesterpolyole sind Polyesterpolyole aus Adipinsäure, Sebacinsäure oder Dodecandicarbonsäure als Dicarbonsäure und aus Hexandiol oder Neopentylglycol als zweiwertigen Alkohol.

Besonders bevorzugt sind Polyurethane aus Polyolen und Polyisocyanten, insbesondere aus Diolen, vorzugsweise Polyesterdiol, Polyetherdiol sowie aus Diisocyanaten, vorzugsweise aromatischen, aliphatischen oder cycloaliphatischen Diisocyanaten.

Die Folie enthält vorzugsweise zusätzlich mindestens ein Biozid. Als Biozide kommen alle dem Fachmann bekannten Biozide in Frage, welche geeignet sind, die Mikroben, welche im Biodieselöl vorhanden sein können, zu bekämpfen. Beispiele für Biozide können sein: 10,10'Oxy-bis-phenoxyarsin (OBPA), N-(Trihalogenmethylthio)-phthalimid, Diphenylantimon-2-ethylhexanoat, Kupfer-8-hydroxychinolin, Organo-Zinn-Verbindungen wie Tributylzinnoxid und Derivate, 2-n-Octyl-2,3-dihydroisothiazol-3-on, 2(n-octyl)-4,5-dichloro-isothiozal-3-on, Decylthioethylamine, N-hydroxymethyl-3,5-dimethylpyrazole, Pyrithione, Octylisothiazolinon (OIT), Dichloroctylisothiazolinon (DCOIT), 2,2-Dibrom-3-nitril-propionamid (DBNPA), 2-Brom-2-nitropropandiol (BNPD), Quaternäre Ammonium-verbindungen (Quats), Isothiazolone, Bromhydroxyacetophenon (BHAP) oder 1,2-Benzisothiazolin-3-on (BIT). Geeignete Biozide sind beispielsweise von der Firma Rohm and Haas unter der Produktelinie "Vinyzene" kommerziell erhältlich. Der Anteil an Bioziden beträgt zwischen 0 und 10 Gew.-%, insbesondere zwischen 0.1 und 5 Gew.-%, besonders bevorzugt zwischen 0.5 und 1 Gew.-%, bezogen auf das Gesamtgewicht der Folie.

Die Folie enthält vorzugsweise 20-80 Gew.-%, bevorzugt 40-70 Gew.-%, noch mehr bevorzugt 50-60 Gew.% PVC, und 20-80 Gew.-%, bevorzugt 30-60 Gew.-%, noch mehr bevorzugt 40-50 Gew.-%, Polyurethan, jeweils bezogen auf das Gesamtgewicht der Folie.

Weiterhin bevorzugt enthält die Folie mindestens ein Hydrolyseschutzmittel und mindestens einen Hitzestabilisator. Als geeignete Hydrolyseschutzmittel kommen vorzugsweise polymere Carbodiimide in Frage, wie sie beispielsweise von der Firma Raschig GmbH unter der Produktelinie "Stabilizer" oder von der Rhein Chemie Gruppe unter der Produktelinie "Stabaxol®" kommerziell erhältlich sind. Als bevorzugte Hitzestabilisatoren können beispielsweise solche auf Ba/Zn- oder Ca/Zn-Basis eingesetzt werden. Auch Hitzestabilisatoren auf Uracil-Basis kommen in Frage. Der Anteil an Hydrolyseschutzmittel, beziehungsweise an Hitzestabilisator, beträgt je zwischen 0 und 10 Gew.-%, insbesondere zwischen 0.1 und 7 Gew.-%, besonders bevorzugt zwischen 1 und 5 Gew.-%, bezogen auf das Gesamtgewicht der Folie.

Als weitere Bestandteile der Folie können weitere Zusatzstoffe vorhanden sein. Insbesondere sind dies für thermoplastische Kunststoffe üblichen Bestandteile und Verarbeitungsmittel, wie beispielsweise Füllstoffe wie z.B. Kreide, Additive wie UV- Stabilisatoren, Gleitmittel, Flammschutzmittel, Antioxidantien wie z.B. auf phenolischer Basis, Geruchsstoffe, Pigmente wie z.B. Titandioxid oder Russ, und Farbstoffe. Der Anteil an weiteren Zusatzstoffen beträgt zwischen 0 und 60 Gew.-%, insbesondere zwischen 0.1 und 50 Gew.-%, besonders bevorzugt zwischen 1 und 10 Gew.-%, bezogen auf das Gesamtgewicht der Folie.

In einer besonders bevorzugten Ausführungsform besteht die Kunststofffolie aus PVC, thermoplastischem Polyurethan, Biozid, Hydrolyseschutzmittel, Hitzestabilisator und Pigmente.

Unter "Folie" oder "Kunststofffolie" wird in der ganzen vorliegenden Schrift auch eine Dichtungsbahn, insbesondere eine thermoplastische Kunststoffdichtungsbahn, verstanden, welche geeignet ist, Behälter, insbesondere Tankfelder, Tankinnenräume sowie Lagerbehälter auszukleiden und abzudichten.

Die geeignete Folie soll bei Temperaturen unter 60°C, insbesondere unter 70°C, bevorzugt unter 80°C, nicht klebrig sein. Die thermoplastische Folie ist vorzugsweise elastisch und weist insbesondere eine Bruchdehnung zwischen 200 und 800 % auf.

Die Folie weist vorzugsweise eine Dicke im Bereich von 10 µm bis 5 mm, insbesondere von 100 µm bis 2 mm, besonders bevorzugt von 500 µm bis 1,5 mm, auf.

Die vorliegende Erfindung betrifft die Verwendung der Folie zur Abdichtung oder Auskleidung von Behältern für das Aufbewahren oder Fördern von Biodieselöl. Zusätzlich betrifft die vorliegende Erfindung die Verwendung der Folie zur Abdichtung oder Auskleidung von Behältern für das Aufbewahren oder Fördern von Pflanzenöl. Die Folie ist daher zur Abdichtung oder Auskleidung von Behältern für das Aufbewahren oder Fördern sowohl von Biodieselöl, wie auch von Pflanzenöl oder Mischungen davon, geeignet. Zusätzlich kann das aufzubewahrende oder zu fördernde Biodieselöl oder das Pflanzenöl oder die Mischung davon weitere Inhaltsstoffe enthalten, oder mit herkömmlichen Kraftstoffen wie beispielsweise Diesel oder Benzin vermischt sein. Die vorliegende Folie ist überraschenderweise besonders geeignet für das Aufbewahren und Fördern von Biodieselöl oder von Biodieselöl enthaltenden Kraftstoffen. Zu den Behältern, welche mit der Folie ausgekleidet oder abgedichtet werden, gehören beispielsweise Tankfelder, Tankinnenräume, Auffangbecken, Lagerbehälter, Transportbehälter, Rohrleitungen oder auch Schläuche. Der Behälter kann sowohl auf der Innenseite wie auf der Aussenseite mit der Folie abgedichtet werden. Dies bringt insbesondere bei Tankräumen, wie z.B. Kellerräumen, welche mit Biodieselöl gefüllt werden, die doppelte Sicherheit, dass das Biodieselöl einerseits nicht mit dem Behälter in Kontakt kommt und andererseits, dass die Umwelt vor Ölverschmutzung geschützt wird. Der Behälter kann aus einem, für das Aufbewahren von Flüssigkeit geeigneten, Material sein, wie beispielsweise aus Kunststoff, Metall, oder Beton.

Unter "Biodieselöl" wird in der ganzen vorliegenden Schrift ein Fettsäurealkylester verstanden, der aus Pflanzenöl oder tierischen Fetten, insbesondere aus Pflanzenöl, und Alkohol, wie beispielsweise Methanol oder Ethanol, sowie gegebenenfalls Katalysatoren herstellbar ist. Das dabei entstehende Glycerin wird dann vom Biodiesel getrennt. Als Pflanzenöle sind insbesondere das Rapsöl, Sojaöl, Sonnenblumenöl, Palmöl oder Palmkernöl geeignet. Daraus entstehen Rapsölalkylylester, Sojaölalkylylester, Sonnenblumenölalkylester, Palm- oder Palmkernölalkylester. Besonders bevorzugt als Biodieselöl sind Rapsölmethylester oder Palmölmethylester, oder Mischungen davon, oder Mischungen aus verschiedenen Pflanzenölmethylestern. Biodieselöl kann auch weitere Zusatzstoffe, wie beispielsweise Alkohol, oder herkömmliche Kraftstoffe wie beispielsweise Diesel oder Benzin, enthalten.

Unter "Pflanzenöl" wird in der ganzen vorliegenden Schrift ein Öl verstanden, welches aus Pflanzen gewonnen werden kann, insbesondere Rapsöl, Sojaöl, Sonnenblumenöl, Olivenöl, Palmöl oder Palmkernöl.

Ein Verfahren zur Herstellung einer Folie umfasst Aufschmelzen und Auswalzen der Zusammensetzung auf einem Walzwerk, vorzugsweise einem Kalander oder Extruder, zu einer Folie.

Typischerweise wird die Zusammensetzung auf eine Verarbeitungstemperatur im Bereich von 80° bis 250°C erhitzt und aufgeschmolzen, vorzugsweise mittels eines Extruders. Als besonders geeignet haben sich Temperaturen zwischen 130°C und 210°C, insbesondere zwischen 160°C und 190°C erwiesen. Anschliessend wird die geschmolzene Zusammensetzung ausgewalzt und typischerweise auf einem auf 100°C bis 250°C, vorzugsweise auf 140°C bis 200°C, noch mehr bevorzugt auf 160°C bis 185°C beheizten Walzwerk, vorzugsweise einem Kalander, zu einer Folie von einer Dicke im Bereich von 10 µm bis 5 mm, insbesondere von 100 µm bis 2 mm, besonders bevorzugt von 500 µm bis 1.5 mm gepresst. Das Pressen kann auch mittels einer auf 100°C bis 250°C, vorzugsweise auf 140°C bis 200°C, noch mehr bevorzugt auf 150°C bis 185°C beheizten Plattenpresse mit einem Druck von 50 bis 200 kN, vorzugsweise von 60 bis 160 kN, bezogen auf eine Pressplattenfläche von typischerweise einer DIN A4-Grösse erfolgen. Typische Herstellverfahren für Folien aus Kunststoff mittels eines Kalanders oder Extruders sind in Schwarz, Ebeling und Furth, "Kunststoffverarbeitung", 10. Auflage, 2005, Vogel Verlag, S. 23-28, und S. 39-68 beschrieben.

Anschliessend wird der mehrschichtige Verbundwerkstoff typischerweise abgekühlt, typischerweise auf einem Walzwerk, zugeschnitten und auf Rollen aufgerollt.

Vorzugsweise wird der mehrschichtige Verbundwerkstoff auf einem Kalander oder einem Extruder hergestellt.

Die Behälter können nach einem dem Fachmann bekannten Verfahren mit der Folie ausgekleidet oder abgedichtet werden. Beispielsweise kann die Folie mit dem Behälter verklebt, verschweisst oder verklemmt werden, oder eine vorkonfektionierte Folie kann über eine Öffnung in den Behälter eingeführt und z.B. dann über eine Vakuum an die Innenwand des Behälters gepresst werden, so dass der Behälterinnenraum ausgekleidet ist.

Ein Verfahren zum Abdichten eines Behälters mit der Folie umfasst die Schritte:
(a) Applikation eines Klebstoffs auf mindestens einen Teil der Oberfläche der Folie; und
(b) Fügen mit der Oberfläche eines Untergrunds innerhalb der Offenzeit des Klebstoffes;
oder
a') Applikation eines Klebstoffs auf die Oberfläche eines Untergrunds; und
b') Fügen mit der Folie innerhalb der Offenzeit des Klebstoffes.

In einem weiteren Schritt (c) erfolgt das Aushärten des Klebstoffs. In einer Ausführungsform wird somit der Klebstoff auf die Oberfläche der Folie appliziert und anschliessend mit der Untergrundoberfläche innerhalb der Offenzeit des Klebstoffes gefügt. In einer weiteren Ausführungsform wird der Klebstoff auf die Oberfläche des Untergrunds appliziert und anschliessend der Folie innerhalb der Offenzeit des Klebstoffes gefügt.

Als Untergrund eignet sich jedes beliebige für einen Behälter geeignete Material wie z.B. Kunststoff, Holz, Metall, Beton.

Es kann von Vorteil sein, wenn die Oberfläche der Folie und/oder die Oberfläche des Untergrunds vor dem Verkleben vorbehandelt wird. Dies können ein Aufbringen eines Primers oder ein Haftvermittler und/oder ein mechanisches Reinigen sein. Im Falle, dass die Oberfläche des mineralischen Untergrunds vorbehandelt wird, ist das mechanische Reinigen, insbesondere ein Bürsten, Schleifen, Sand- oder Kugelstrahlen, von grossem Vorteil. Im Falle von Beton ist für die Gewährleistung einer guten und langlebigen Verklebung das Entfernen der sogenannten Zementhaut, insbesondere mittels Schleifen, Sandstrahlen oder Kugelstrahlen, und gegebenenfalls zusätzlich die Verwendung eines Primers, als vorteilhaft zu empfehlen. Besonders bevorzugt ist aber ein Verfahren ohne Vorbehandlung, bei dem die Folie direkt und ohne Vorbehandlung über den Klebstoff mit dem Untergrund verklebt wird.

Es hat sich gezeigt, dass sich Polyurethanklebstoffe, (Meth)acrylat-klebstoffe, Epoxidharzklebstoffe oder Klebstoffe auf Basis von Alkoxysilan-funktionellen Prepolymeren bestens für eine Verklebung eignen. Besonders bevorzugt sind die Epoxidharzklebstoffe.

Als Polyurethanklebstoffe sind einerseits einkomponentige feuchtigkeitshärtende Klebstoffe oder zweikomponentige Polyurethanklebstoffe geeignet. Derartige Klebstoffe enthalten Polyisocyanate, insbesondere in Form von Isocyanat-Gruppen aufweisenden Prepolymeren. Bevorzugt werden Polyurethanklebstoffe, wie sie von Sika Schweiz AG unter den Produktelinien Sikaflex®, SikaPower® und SikaForce® kommerziell verkauft werden.

Als (Meth)acrylatklebstoffe sind zweikomponentige Klebstoffe zu verstehen, deren erste Komponente Acrylsäure und/oder Methacrylsäure und/oder deren Ester umfasst, und deren zweite Komponente ein Radikalbildner, insbesondere ein Peroxid, umfasst. Bevorzugte derartige Klebstoffe sind unter der Produktelinie SikaFast® kommerziell von Sika Schweiz AG erhältlich.

Als Epoxidharzklebstoffe werden Klebstoffe verstanden, welche auf Basis von Glycidylethern, insbesondere von Diglycidylether von Bisphenol-A und/oder Bisphenol-F, formuliert sind. Besonderes geeignete sind zweikomponentige Epoxidharzklebstoffe, deren eine Komponente Diglycidylether von Bisphenol-A und/oder Bisphenol-F enthalten und deren zweite Komponente Polyamine und/oder Polymerkaptane enthalten. Bevorzugt werden zweikomponentige Epoxidharzklebstoffe, wie sie unter der Produktelinie Sikadur® kommerziell von Sika Schweiz AG erhältlich sind. Als besonders geeignet zum Verkleben von Folien mit einem Untergrund haben sich die zweikomponentigen Epoxidharzklebstoffe Sikadur®-Combiflex®, Sikadur®-31, Sikadur®-31 DW und Sikadur®-33, bevorzugt Sikadur®-Combiflex®, von Sika Schweiz AG gezeigt.

Als Klebstoffe auf Basis von Alkoxysilan-funktionellen Prepolymeren werden insbesondere Klebstoffe auf Basis von MS-Polymeren oder SPUR (Silane terminated Polyurethanes)-Prepolymeren verstanden. Derartige Alkoxysilan-funktionelle Prepolymere lassen sich beispielsweise über eine Hydrosilyierungsreaktion aus mindestens zwei C=C-Doppelbindung aufweisenden Polyether, insbesondere aus allylterminierten Polyoxyalkylenpolymeren, und mit einem Hydrosilan oder über eine Additionsreaktion von Isocyanatoalkylalkoxysilanen an Polyole oder an Hydroxy-funktionelle Polyurethanprepolymere oder über eine Additionsreaktion von Aminoalkylalkoxysilanen an Isocyanat-funktionelle Polyurethanprepolymere herstellen, wobei die Polyurethanprepolymere ihrerseits über eine Reaktion von Polyisocyanaten und Polyolen und/oder Polyaminen in bekannter Art und Weise zugänglich sind. Klebstoffe auf Basis von Alkoxysilan-funktionellen Prepolymeren sind feuchtigkeitshärtend und reagieren bei Raumtemperatur.

Grundsätzlich können auch reaktive Heissschmelzklebstoffe eingesetzt werden, wie sie von Sika Schweiz AG unter der Produktelinie SikaMelt® kommerziell verkauft werden. Bevorzugt werden jedoch raumtemperaturhärtende Klebstoffe.

Nach dem Fügen erfolgt in einem weiteren Schritt die Aushärtung des Klebstoffes. Es ist dem Fachmann jedoch selbstverständlich bewusst, dass die Vernetzung des Klebstoffs bei zweikomponentigen Klebstoffen bereits nach dem Mischen, beziehungsweise bei einkomponentigen Polyurethanklebstoffen oder auf Alkoxysilan-funktionellen Prepolymeren basierenden Klebstoffen unmittelbar nach dem Kontakt mit Luftfeuchtigkeit, beginnt. Somit ist der Term des Aushärtens in Schritt (c) nicht als Beginn des Aushärtens, sprich Beginn der Vernetzung, zu verstehen, sondern dahin gehend, dass die Vernetzung bereits genügend weit fortgeschritten ist, dass der Klebstoff bereits eine so grosse Festigkeit aufgebaut hat, dass er Kräfte übertragen kann, und die sogenannte Frühfestigkeit erreicht hat. Die Aushärtung ist abgeschlossen, wenn der Klebstoff seine Endfestigkeit erreicht hat.

Ein Behälter umfassend eine Folie ist vorzugsweise ein Lager- oder Transportbehälter, insbesondere ein Tank, eine Rohrleitung oder ein Schlauch, welcher mit der Folie ausgekleidet und/oder abgedichtet ist.

### Beispiele

Die Erfindung wird nun anhand von Beispielen näher erläutert.

### 1 Herstellung einer Kunststofffolie

50 Gew.-Teile PVC (K-Wert 70) wurden mit 50 Gew.-Teilen Baymod® PU (kommerziell erhältlich von Bayer), 2-4 Gew.-Teilen Ba/Zn-Stabilisator (Lastab DC 261, kommerziell erhältlich von Lagor, IT), 1-6 Gew.-Teilen Hydrolyseschutzmittel (Stabilisator 9000, kommerziell erhältlich von Raschig GmbH) und 5 Gew.-Teile Vinyzene IT 4000 (kommerziell erhältlich von Roehm and Haas) gemischt. Circa 200 g dieser Zusammensetzung wurden auf einem Collin Walzwerk bei einer Temperatur um 160°C aufgeschmolzen, während 5 bis 10 Minuten gemischt und zu einem Fell von circa 0.6 mm Dicke ausgewalzt. Anschliessend wurde das Fell mittels einer auf eine Temperatur zwischen 150 und 170°C beheizten Plattenpresse mit einem Druck von 80 kN, bezogen auf die Pressplattenfläche der Grösse DIN A4, zu einer Folie von 0.6 mm Dicke gepresst.

### 2. Prüfung der Folie

Mit der gemäss Beispiel 1 hergestellten Folie wurden Langzeitlagerungen in Biodieselöl (Rapsölmethylester) sowie in Rapsöl und Sonnenblumenöl durchgeführt. Die Beständigkeit der Folie wurde nach DIN EN 13160-7:2003 geprüft. Dabei hat sich gezeigt, dass solche Folien im Biodieselöl wie auch in den Pflanzenölen beständig sind. Geprüft wurden unter anderem die Quellung, Zugfestigkeit und Dehnung gemäss obiger Norm.

### 3. Vergleichsbeispiel

Zum Vergleich wurde eine Folie aus thermoplastischem Polyurethan hergestellt. Dazu wurden 200 g Estane® 54600 TPU (kommerziell erhältlich von Noveon, Inc.) ohne Zusatzmittel auf einem Collin Walzwerk bei einer Temperatur um 160°C während 5 bis 10 Minuten plastifiziert und zu einem Fell von circa 0.6 mm Dicke ausgewalzt. Anschliessend wurde das Fell mittels einer auf eine Temperatur zwischen 150 und 170°C beheizten Plattenpresse mit einem Druck von 80 kN, bezogen auf die Pressplattenfläche der Grösse DIN A4, zu einer Folie von 0.6 mm Dicke gepresst.

Mit der Folie aus thermoplastischem Polyurethan wurden Langzeitlagerungen in Biodieselöl (Rapsölmethylester) durchgeführt. Die Beständigkeit der Folie wurde nach DIN EN 13160-7:2003 geprüft. Nach 56 Tagen wies die TPU-Folie Risse auf und war für das Abdichten von Tanks nicht mehr geeignet.

## Patentansprüche

1. Verwendung einer Kunststofffolie zur Abdichtung oder Auskleidung von Behältern für das Aufbewahren oder Transportieren von Biodieselöl oder Pflanzenöl oder Mischungen davon, wobei die Folie eine Mischung aus Polyvinylchlorid (PVC) und mindestens einem thermoplastischen Polyurethan enthält.

2. Verwendung nach Anspruch 1, **dadurch gekennzeichnet, dass** die Folie keine Weichmacher enthält.

3. Verwendung nach einem der Ansprüche 1 bis 2, **dadurch gekennzeichnet, dass** die Folie mindestens ein Biozid enthält.

4. Verwendung nach einem der vorhergehenden Ansprüche, **dadurch gekennzeichnet, dass** die Folie zusätzlich mindestens ein Hydrolyseschutzmittel und mindestens einen Hitzestabilisator enthält.

5. Verwendung nach einem der vorhergehenden Ansprüche, **dadurch gekennzeichnet, dass** die Folie 20-80 Gew.-% PVC und 20-80 Gew.-% des thermoplastischen Polyurethans enthält, jeweils bezogen auf das Gesamtgewicht der Folie.

6. Verwendung nach einem der vorhergehenden Ansprüche, **dadurch gekennzeichnet, dass** der Behälter ein Lagerbehälter, ein Transportbehälter, ein Tank oder eine Rohrleitung ist.

7. Verwendung nach einem der vorhergehenden Ansprüche, **dadurch gekennzeichnet, dass** die Kunststofffolie zur Abdichtung oder Auskleidung von Behältern für das Aufbewahren oder Transportieren von Biodieselöl verwendet wird und das Biodieselöl mindestens ein Rapsölmethylester ist oder enthält.

## Claims

1. Use of a plastics foil for the sealing or lining of containers for the storage or transportation of biodiesel oil or vegetable oil or a mixture thereof, where the foil comprises a mixture of polyvinyl chloride (PVC) and of at least one thermoplastic polyurethane.

2. Use according to Claim 1, **characterized in that** the foil comprises no plasticizers.

3. Use according to Claim 1 or 2, **characterized in that** the foil comprises at least one biocide.

4. Use according to any of the preceding claims, **characterized in that** the foil also comprises at least one hydrolysis stabilizer and at least one heat stabilizer.

5. Use according to any of the preceding claims, **characterized in that** the foil comprises from 20 to 80% by weight of PVC and from 20 to 80% by weight of the thermoplastic polyurethane, based in each case on the total weight of the foil.

6. Use according to any of the preceding claims, **characterized in that** the container is a storage container, a transport container, a tank or a pipeline.

7. Use according to any of the preceding claims, **characterized in that** the plastics foil is used for the sealing or lining of containers for the storage or transportation of biodiesel oil, and the biodiesel is, or comprises, at least one rapeseed oil methyl ester.

## Revendications

1. Utilisation d'une feuille en matériau synthétique pour étanchéifier ou revêtir des récipients destinés à la conservation ou au transport de biodiesel ou d'huile végétale ou de leurs mélanges, où la feuille contient un mélange de poly(chlorure de vinyle) (PVC) et d'au moins un polyuréthane thermoplastique.

2. Utilisation selon la revendication 1, **caractérisée en ce que** la feuille ne contient pas de plastifiant.

3. Utilisation selon l'une quelconque des revendications 1 à 2, **caractérisée en ce que** la feuille contient au moins un biocide.

4. Utilisation selon l'une quelconque des revendications précédentes, **caractérisée en ce que** la feuille contient en outre au moins un agent de protection contre l'hydrolyse et au moins un stabilisateur à la chaleur.

5. Utilisation selon l'une quelconque des revendications précédentes, **caractérisée en ce que** la feuille contient 20-80% en poids de PVC et 20-80% en poids de polyuréthane thermoplastique, à chaque fois par rapport au poids total de la feuille.

6. Utilisation selon l'une quelconque des revendications précédentes, **caractérisée en ce que** le récipient est un réservoir de stockage, un réservoir de transport, une citerne ou un tuyau.

7. Utilisation selon l'une quelconque des revendications précédentes, **caractérisée en ce que** la feuille en matériau synthétique est utilisée pour étanchéifier ou revêtir des récipients destinés à la conservation ou au transport de biodiesel et le biodiesel est ou contient au moins un ester méthylique de l'huile de colza.
